# EUROPEAN PATENT SPECIFICATION

(11) **EP 0 705 787 B1**
(45) Date of publication and mention of the grant of the patent: **02.02.2000**
(21) Application number: 95850174.4
(22) Date of filing: 05.10.1995
(51) Int. Cl.: B66F 9/075

(54) **Service arrangement at trucks**
Serviceeinrichtung an Arbeitsfahrzeugen
Dispositif d'entretien pour la maintenance de chariots

(30) Priority: 07.10.1994 SE 9403400
(43) Date of publication of application: 10.04.1996
(73) Proprietor: BT Industries Aktiebolag, S-59581 Mjölby (SE)
(72) Inventor: Isaksson, Lars, S-595 00 Mjölby (SE)
(74) Representative: Berglund, Erik Wilhelm

(56) References cited:
- EP-A- 0 383 278
- EP-A- 0 545 877
- DE-A- 3 602 762
- DE-A- 3 608 313
- DE-A- 4 138 834
- US-A- 3 472 547
- PATENT ABSTRACTS OF JAPAN vol. 18 no. 463 (M-1664) ,29 August 1994 & JP-A-06 144793 (TOYOTA AUTOM LOOM WORKS) 24 May 1994,

## Description

From the Swedish patent application 9103390-2 it is previously known to arrange the working place of the truck driver at a high lifting truck in such a way that the seat of the driver, controls, roof e.t.c. constitute a cabin that is tiltable backwards in order to incline the driver to the rear. This will make high lifts more comfortable for the driver since he does not have to turn his head and neck upwards as much as otherwise. The ergonomics is thus essentially improved. In order to secure that neither driver nor others can be caught between the cabin part of the truck and its chassis more panels are required than on ordinary trucks. These panels must also be mounted with more precision than otherwise is the case in order to a ascertain sufficient security. This also result in these trucks becoming far more difficult to service with the conventional method of quite simple removing and remounting panels.

It is known from US-A-3 472 547 to use a hydraulic cylinder to tilt up the entire bodywork (essentially the cab) of a lorry from its chassis to give access to the engine.

In view of the above service problem there exist a need for improved service possibilities for this kind of truck. In accordance with the invention this object is solved by the technical features of the characterizing portion of claim 1 by making the cabin part of the lifting truck further tiltable in addition to the movement that can be carried out during lifting work. The cabin is so to say tilted as a lid and allows free access to the components mounted on the chassis straight from above while the components in the cabin part are accessible from the actual underside that in the uptilted position will be essentially vertical. In this way no panels has to be dismounted and mounted and the risk for deforming of panels or the like due to a slight misalignment on mounting is eliminated. Furthermore the service time can be shortened since the entire inner of the lifting truck is quickly accessible in one quickly executed step, namely the tilting upwards of the cabin.

In a preferred further development of the inventive thought the same cylinder that takes care of the tilting movement during lifting work can be used to lift the cabin up past its uppermost working position after freeing of a lock. In this way the service tilting is achievable without a lot of extra means requiring location in the truck and also this reduces the cost.

The cost may be reduced further by the use of a comparatively short cylinder only capable of lifting the cabin up to a position in the vicinity of the position where the cabin balances on its bearings. Also the piston rod of the tilting cylinder may be hollow and into the inner of this a pulling rod extends, that is freely movable between an inserted and an extended position. When the truck cabin is lifted to the full extension of the piston the cabin has almost reached its position of equilibrium so that the force required for its tilting past this to the service position is comparatively small and a large part of the cabin has during the piston movement come to be located behind the turning center of the cabin. This in turn means that the cabin manually easily can be brought from its upper balanced position to the service position with the cabin in its most rear upturned position. In this position the cabin may for instance be prevented from further movement by the pull rod not being extractable any further.

Preferably, in order to provide a softer contact in the end position at the extension of the pull rod out from the piston rod and at the complete insertion of this in the piston rod, the pull rod may for instance in its inner end carry an end position damper in the shape of a piston arranged in a cylinder that is freely movable, but in a degree corresponding to the desired damping is sealed relative its piston rod respectively closed in the other end. At the extension movement the piston is maximally inserted into the cylinder, the friction of the cylinder and the piston holding them in this position until the cylinder abuts the movement limit for the extension. At this the air is compressed and the contact between the piston and the cylinder dampens the contact when the air leaks over to the other side of the piston and the cylinder chamber on that side. When this has occurred the movement is ended and the damping of the return movement has been prepared by the damping air chamber being on the other side of the piston. The friction of the piston relative the cylinder should for the functioning of the simple damper above be greater than that between the cylinder and the enclosing hole in the piston rod of the tilting cylinder. Alternatively or additionally the pulling rod may in its inner end include piston means that cooperate with the enclosing hole in the piston rod so that a damping piston is obtained securing a damped movement for the service uptilting and the lowering of the cabin.

When service has well taken place the cabin is by hand brought back over the balanced position to the position where the pulling rod is fully inserted into the piston rod. Since the cabin can be gripped at its upper rear roof edge a long lever is achieved making the movement easier even if the cabin in itself is heavy. By then releasing the oil outlet from the cylinder chamber of the cabin tilt cylinder the cabin can by its own weight sink down towards its working interval at lifting. The normal working area of the piston movement is once again secured or restricted and the cabin is again in its working position or area.

Obviously service may in this manner take place quickly and securely with a minimum of measurements. The only thing needed is to free the tilting movement restriction for the cabin in the shape of a single lock and then an electrohydraulic and manual continued liftting/tiling of the cabin can take place. Since a major part of the movement is carried out manually the risk for inadvertent damage is also reduced.

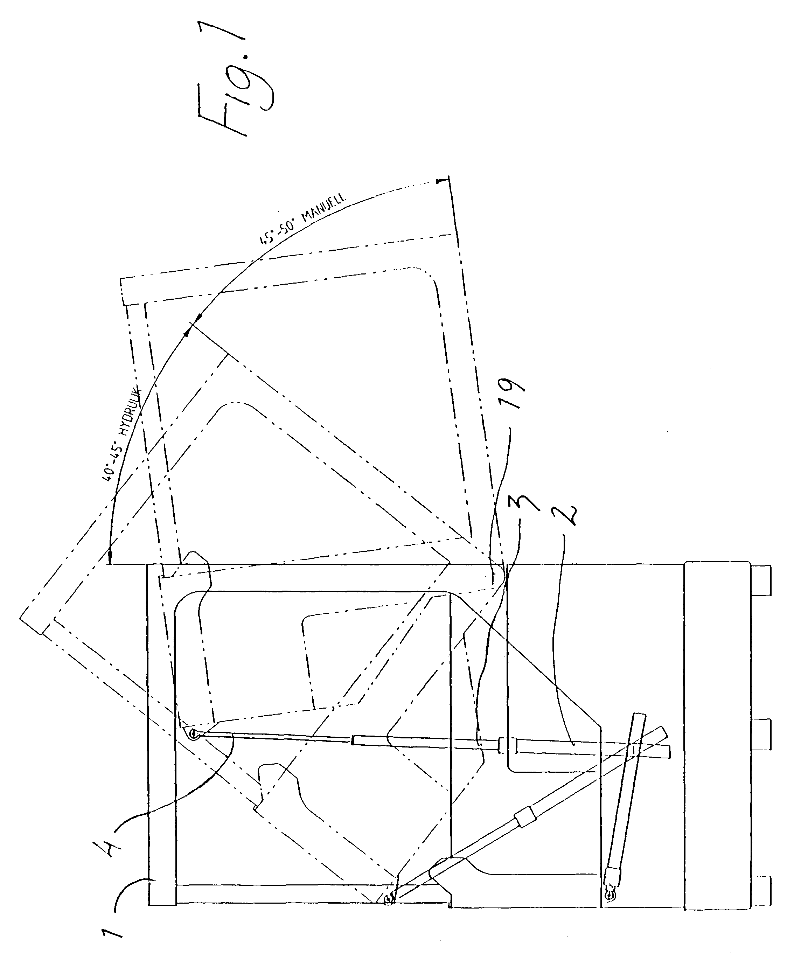

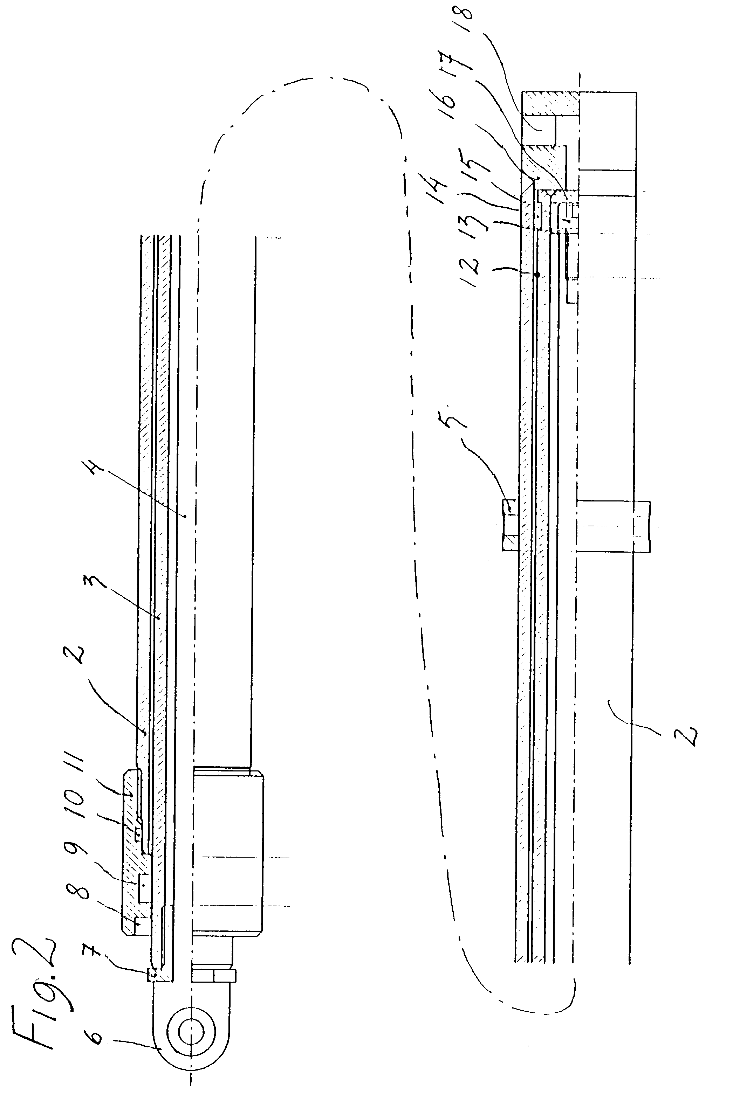

In the following an embodiment of the invention is described as shown in the drawings, where Fig. 1 schematically shows a truck cabin seen from the side and fig 2 an hydraulic piston for the lifting/tilting movement.

The lifting truck shown schematically in fig 1 has a cabin 1 which is shown in full line in its lower most position. A hydraulic piston is arranged to tilt the cabin with the front end of the cabin (in relation to the driver) upwards so that the driver is inclined or tilted rearward when loads are lifted high to make it easier for the driver to keep the forks and load in sight. The cabin is swung around a swivel bearing at the rear of the truck. The most tilting position of the cabin during lifting work is mechanically defined by an end position stop or lock.

This end position stop is constituted by a block with a T-shaped cross section that through a slot in the cabin wall at the legs of the driver grips into and runs in a protecting channel. The T-shaped position stop comes in the upper end position of the tilting movement in contact with a stop or lock that against the action of a spring can be brought out of the channel. Preferably the lock is arranged with a chamfered edge so that it at an opposite lowering movement of the T-piece can be lifted and passed by this so that the cabin after executed service can return to its working area without manual influence on the lock. The T-piece together with the cooperating channel also serves as an efficient guide for the movement of the cabin so that there is no risk of the side panels of cabin and truck body deforming each other even if a tight fit is used. The hydraulic cylinder can after the freeing of the lock be activated by its ordinary control or by an additional control for the service uptilting of the cabin. When the piston then reaches its fully extended position the cabin has reached its middle, with point dashed lines drawn position with an uptilting corresponding to about 45° from the lowest position of the cabin. In this position the cabin 1 is uptilted to such an extent that it is situated close to an upper balance position of the uptilting movement. The force necessary in this position to move the cabin further is therefor comparatively small.

The cabin is connected to the tilting piston rod via a pull rod movable inside the hollow piston rod between a fully inserted position and an extracted position were stop means in the inner end of the pull rod are in contact with other stop means in the outer end of the piston rod, preventing the pull rod from being drawn out of the piston rod. The free movement of the pull rod in the piston rod allows the cabin to be tilted manually from the almost balanced position to a 45° uptilted position of the cabin were further tilting is stopped by the stop means on pull rod and piston rod. This last tilting of the cabin is done entirely manually until the cabin has reached the extreme clockwise position in Fig 1 with the rear wall of the cabin essentially horizontally. In this position a god accessibility is secured to the entire inner of the truck.

When required service steps and possible repairs and exchanges of components respectively have been executed the cabin is by hand swung back upwards and forwards until the pull rod once again is entirely inserted into the piston rod. The center of gravity for the cabin is now again in front of the swing axis for the tilting movement and by releasing the outlet from the piston the cabin will be lowered down towards its work angle interval at lifting and the upper end position stop is passed, then once again to become active.

The hydraulic cylinder 2 is built in the way that is shown in fig 2 with a welded on swing bracket 5 with which the cylinder is pivotally mounted in the chassis of the truck. In the cylinder the piston rod 3 is displaceably moveable between a completely inserted position and an extended position where a wire located in a recess in the piston rod will abut against a stop on the top nut 11 of the cylinder. In the top nut seals 9 and 10 and a scraper 8 are arranged and in the inner end of the piston in addition to the stop wire a guide band is arranged around the piston guiding this in the inner of the cylinder preventing metallic contact between cylinder and piston rod. In the lower end the inner space of the cylinder is connected to suitable control means for the feeding, draining and enclosing of hydraulic oil via a hydraulic connection 18 in the bottom end 16. The piston rod 3 is in its lower end closed by a bottom 17 so that the piston rod constitutes the piston.

In the piston rod 3 the pulling rod 4 is displaceable in such a way that the piston rod in its upper end is provided with a bushing 7 threaded in the outer end of the piston rod, in which bushing the piston is slidable. At the inner end of the pull rod an abutment disc 13 is threaded fast between the end of the rod and a bolt threaded in the rod. The abutment disc 13 also serves as a guide for the inner end of the pull rod so that this slides centrally in the hole in the piston rod. When the rod is fully extended the abutment disc 13 abuts against the inner end of the bushing 7. In the other end of the pull rod 4 a fastening lug 6 is arranged for the fastening of the hydraulic cylinder device to the cabin.

By means of the fit or play between the bushing 7 and the pull rod 4 respectably the abutment disc 13 and the inner wall of the piston rod hole damping can achieved for the movement of the pull rod in the piston rod.

The tilt swing axis 19 of the tiltable cabin in the chassis of the truck is located at the rear of the cabin so that a maximum of free access to the inner of the machine is obtained. In this way also the advantage is obtained that still in the about 45° uptilted position corresponding to the end of the stroke of the piston the point of gravity of the driver as well as that of the cabin will be situated in front of the tilt swing axis 19. This means that even if one through negligence would forget to lock the limiting means for the cabin movement or if these break the hydraulic system can not lift the cabin higher than shortly before the balanced position. There is no risk of the cabin being swung up and tilted fully back with the driver in it as would for instance be the case if one used a very long hydraulic cylinder or a multiple stage cylinder if the lock inadvertently is freed. If so is desirable of course further securing means can be arranged for the pull rod in the piston rod so that the pull rod can not be pulled out of the piston rod until a corresponding on the piston rod arranged lock has been released. The described device does thus not only mean a simplified and therefor cost reduced piston means for the tilting of cabin and driver at use as well as the uptilting of the cabin at service but prevent also an undesirable over tilting of cabin and driver to the service position if one should forget to secure the cabin movement or if this lock should be damaged and come out function. This also means that even for this case the cabin can always be returned to its horizontal lower position by its own and the drivers weight and pressing away the oil in the hydraulic cylinder. In other words the hydraulics cylinder does not need to be of the double action type.

Preferably the cabin can be lowered by the opening of a valve letting out hydraulic oil. Preferably this valve is electrically controlled and with the activating control button or buttons placed in such a way that the user impossible can be caught between cabin and truck body at the lowering of the cabin, for instance these controls may be located at the rear edge of the cabin roof.

At the uptilting of the cabin the user must at the same time free the end position lock and activate the hydraulic pump. Since lock and cylinder control only are accessible from the side of the truck the driver can not get stuck between the cabin and a wall during the first uptilting of the cabin by hydraulic force.

Through the invention is obtained not only a good access to the inner of the lifting truck but this is also protected against unauthorized or inadvertent damage. With the invention it becomes possible to arrange the brackets for the side panels of the lifting truck in the lower part as well as in the upper part, that is the cabin, on the inside. This does not only mean the possibility of an improved appearance but reduces also the risk of protruding bolts, screws, rivets or alike catching in gods or person.

Since the piston rod via the pull rod at all time is connected to the cabin no additional release is needed nor is a careful guiding of gripping brackets necessary to secure that the parts find each other after service, instead the pull rod automatically guides the parts back to their previous position, even if the bearings become worn or have a great play.

## Claims

1. Arrangement at lifting trucks of the kind that has a cabin that is tiltable backwards to improve the drivers view, whereby the most tilting position of the cabin during lifting work is mechanically defined by an end position stop or lock, **characterized in** that for service purposes the cabin in addition to the movement that can be carried out during lifting work is tiltable even further backwards by releasing the stop or lock in order to provide access to the inner of the lifting truck in the same bearings that are used for tilting of the cabin during lifting work.

2. Arrangement according to claim 1, **characterized in** that a cylinder that tilts the cabin for the improved driver vision at work is also used to tilt the cabin further for service.

3. Arrangement according to claim 2, **characterized in** that the tilting cylinder is comperatively short so that the full extent of the tilting movement of the cabin provided by the cylinder ends before the cabin reaches its balanced position.

4. Arrangement according to claim 1, 2 or 3, **characterized in** the cabin being further tiltable by hand from the fully extended position of the tilting cylinder.

5. Arrangement according to any of the claims 1 - 5, **characterized in** a cabin tilting piston/cylinder device where the piston rod is hollow with an additional pull rod provided therein and movable between an inserted and an extended position enabling the manual further tilting of the cabin past the end position of the piston/cylinder device.

6. Arrangement according to claims 6, **characterized in** the additional rod being provided with stop means cooperating with stop means on the piston rod together constituting end stop means for the cabin service movement.

7. Arrangement according to claims 6 or 7, **characterized in** the additional pull rod being provided with damping means in its inner end providing for a damping of the movement in the end positions.

## Patentansprüche

1. Anordnung bei Hebe-Arbeitsfahrzeugen von der Art, die eine Kabine hat, die nach hinten kippbar ist, um das Gesichtsfeld von Fahrern zu verbessern, wobei die Position, bei der die Kabine während einer Hebearbeit am meisten gekippt ist, mechanisch durch einen Endpositionsstopp oder eine Verriegelung definiert ist, **dadurch gekennzeichnet, daß** die Kabine für Servicezwecke zusätzlich zu der Bewegung, die während einer Hebearbeit ausgeführt werden kann, durch Lösen des Stopps oder der Verriegelung in denselben Lagern noch weiter nach hinten kippbar ist, um einen Zugriff auf das Innere des Hebe-Arbeitsfahrzeugs zu schaffen, die zum Kippen der Kabine während einer Hebearbeit verwendet werden.

2. Anordnung nach Anspruch 1, **dadurch gekennzeichnet, daß** ein Zylinder, der die Kabine für die verbesserte Sicht eines Fahrers bei einer Arbeit kippt, auch zum Weiterkippen der Kabine für einen Service verwendet wird.

3. Anordnung nach Anspruch 2, **dadurch gekennzeichnet, daß** der Kippzylinder vergleichsweise kurz ist, so daß das vollständige Ausmaß der durch den Zylinder vorgesehenen Kippbewegung der Kabine endet, bevor die Kabine ihre Gleichgewichtsposition erreicht.

4. Anordnung nach Anspruch 1, 2 oder 3, **dadurch gekennzeichnet, daß** die Kabine von der vollständig ausgezogenen Position des Kippzylinders per Hand weiter gekippt werden kann.

5. Anordnung nach einem der Ansprüche 1 - 4, **dadurch gekennzeichnet, daß** eine Kabinenkipp-Kolben/Zylinder-Vorrichtung vorgesehen ist, wobei die Kolbenstange hohl ist, wobei eine zusätzliche Zugstange darin vorgesehen ist und zwischen einer eingeführten und einer ausgezogenen Position bewegbar ist, was das manuelle weitere Kippen der Kabine hinter die Endposition der Kolben/Zylinder-Vorrichtung ermöglicht.

6. Anordnung nach Anspruch 5, **dadurch gekennzeichnet, daß** die zusätzliche Stange mit einer Stoppeinrichtung versehen ist, die mit einer Stoppeinrichtung an der Kolbenstange kooperiert, die miteinander eine Endstoppeinrichtung für die Kabinenservicebewegung bilden.

7. Anordnung nach Anspruch 5 oder 6, **dadurch gekennzeichnet, daß** die zusätzliche Zugstange mit einer Dämpfungseinrichtung in ihrem inneren Ende versehen ist, die für ein Dämpfen der Bewegung in den Endpositionen sorgt.

## Revendications

1. Agencement sur des chariots, du type présentant une cabine qui est inclinable vers l'arrière pour améliorer la vue des conducteurs, de manière que la position la plus inclinée de la cabine durant le travail de levage soit définie mécaniquement par une butée ou un verrou de position d'extrémité, caractérisé en ce que, à des fins d'entretien, la cabine, en plus du déplacement qui peut être exécuté durant le travail de levage, est inclinable encore plus vers l'arrière par une libération de la butée ou du verrou en vue de permettre un accès à l'intérieur du chariot de levage dans les mêmes paliers qui sont utilisés pour l'inclinaison de la cabine durant le travail de levage.

2. Agencement selon la revendication 1, caractérisé en ce qu'un cylindre, qui incline la cabine pour offrir une meilleure vision au conducteur en travail, est également utilisé pour incliner la cabine encore en vue d'un entretien.

3. Agencement selon la revendication 2, caractérisé en ce que le cylindre d'inclinaison est comparativement court de manière que toute l'étendue du déplacement d'inclinaison de la cabine assurée par le cylindre s'achève avant que la cabine atteigne sa position équilibrée.

4. Agencement selon la revendication 1, 2 ou 3, caractérisé en ce que la cabine est en outre inclinable à la main, à partir de la position complètement déployée du cylindre d'inclinaison.

5. Agencement selon l'une quelconque des revendications 1-4, caractérisé par un dispositif de piston/cylindre d'inclinaison de cabine, dans lequel la tige de piston est creuse avec une tige de traction supplémentaire fournie en son sein et déplaçable, entre une position insérée et déployée permettant l'inclinaison en outre manuelle de la cabine au delà de la position d'extrémité du dispositif à piston/cylindre.

6. Agencement selon la revendication 5, caractérisé en ce que la tige supplémentaire est pourvue de moyens de butée coopérant avec des moyens de butée se trouvant sur la tige de piston constituant conjointement des moyens de butée d'extrémité pour le déplacement d'entretien de cabine.

7. Agencement selon la revendication 4 ou 6, caractérisé en ce que la tige de traction supplémentaire est pourvue de moyens d'amortissement dans son extrémité inférieure permettant un amortissement du déplacement dans les positions d'extrémité.
